# EUROPEAN PATENT APPLICATION

(11) **EP 4 459 756 A1**
(43) Date of publication of application: **06.11.2024**
(21) Application number: 24165776.6
(22) Date of filing: 25.03.2024
(51) Int. Cl.: H01M 50/107, H01M 50/213, H01M 50/264

(54) **BATTERY PACK**

(30) Priority: 26.03.2023 KR 20230039402; 01.12.2023 KR 20230172611
(71) Applicant: Samsung SDI Co., Ltd., Yongin-si, Gyeonggi-do 17084 (KR)
(72) Inventor: KWAG, Nohyun, 17084 Yongin-si, Gyeonggi-do (KR); KIM, Heonhee, 17084 Yongin-si, Gyeonggi-do (KR); PARK, Daeyeop, 17084 Yongin-si, Gyeonggi-do (KR); WOO, Minuk, 17084 Yongin-si, Gyeonggi-do (KR); LEE, Jeongmin, 17084 Yongin-si, Gyeonggi-do (KR); YOON, Seokbin, 17084 Yongin-si, Gyeonggi-do (KR)
(74) Representative: Gulde & Partner

(57) **Abstract**

A battery pack includes cylindrical battery cells, each of the cylindrical battery cells including an electrode and an outer circumferential surface with a beading unit depressed into the outer circumferential surface to define a bottleneck in an inner direction of the outer circumferential surface, and a cell holder including fixing support units configured to support the cylindrical battery cells, each of the fixing support units covering at least a portion of the outer circumferential surface of a corresponding one of the cylindrical battery cells, and each of the fixing support units including at least one position regulating protrusion protruding toward the beading unit of the corresponding one of the cylindrical battery cells.

## Description

### BACKGROUND

### 1. Field

One or more embodiments relate to a battery pack.

### 2. Description of the Related Art

A secondary battery may be charged and discharged multiple times to enable repeated use. Secondary batteries are used as an energy source for, e.g., mobile devices, electric vehicles, hybrid vehicles, electric bicycles, and uninterruptible power supplies. Depending on the type of external devices to which the secondary batteries are applied, the secondary batteries may be used in the form of a single battery or a module in which multiple batteries are connected to form a single unit.

### SUMMARY

The invention is defined by the appended claims. The description that follows is subjected to this limitation. Any disclosure lying outside the scope of said claims is only intended for illustrative as well as comparative purposes. According to the present invention, a battery pack includes a plurality of cylindrical battery cells each including an electrode formed at an end in a longitudinal direction in which an outer circumferential surface extends, and a beading unit inserted to form a bottleneck in an inner direction of the outer circumferential surface, and a cell holder including a plurality of fixing support units each covering at least a portion of the outer circumferential surface so that each of the plurality of cylindrical battery cells is fixed, wherein each of the plurality of fixing support units of the cell holder includes a position regulating protrusion protruding toward the beading unit of the cylindrical battery cell.

The position regulating protrusions may be formed at the same level as the beading unit based on the longitudinal direction in which the outer circumferential surface extends.

The position regulating protrusions may protrude from each of the fixing support units in a direction crossing the longitudinal direction in which the outer circumferential surface extends.

The position regulating protrusions may protrude from each of the fixing support units toward the central axis of the cylindrical battery cell.

An end of the position regulating protrusion may be disposed in an inner area of the outer circumferential surface of the cylindrical battery cell.

At least a portion of the position regulating protrusion may be inserted into the inner area of the outer circumferential surface.

At least a portion of the position regulating protrusion may contact at least a portion of the beading unit.

The position regulating protrusions may be inserted into the beading unit using an interference fit method.

The beading unit may have a first width in the longitudinal direction in which the outer circumferential surface extends and the position regulating protrusion may have a second width in a longitudinal direction in which the outer circumferential surface extends, wherein the second width is formed to be greater than the first width.

The position regulating protrusions may be formed symmetrically with respect to the central axis of the cylindrical battery.

The position regulating protrusions may be formed in plural pieces spaced apart at predetermined intervals in the circumferential direction of the outer circumferential surface.

The position regulating protrusions may be formed symmetrically with respect to the central axis of the cylindrical battery.

The position regulating protrusions may be formed at least three or more.

According to one or more embodiments, the at least one position regulating protrusion may be formed in plural pieces arranged around a central axis of the corresponding one of the cylindrical battery cells. Furthermore, the plural pieces of the position regulating protrusion may be spaced apart at predetermined intervals in a circumferential direction of the outer circumferential surface of the corresponding one of the cylindrical battery cells. Furthermore, the plural pieces of the position regulating protrusion may be arranged symmetrically with respect to the central axis of the corresponding one of the cylindrical battery cells. Furthermore, the plural pieces of the position regulating protrusion may include at least three pieces.

Further embodiments of the present invention could be learned from the dependent claims as well as the following description.

### BRIEF DESCRIPTION OF THE DRAWINGS

Features will become apparent to those of skill in the art by describing in detail exemplary embodiments with reference to the attached drawings, in which:
FIG. 1 is an exploded perspective view of a battery pack according to embodiments;
FIG. 2 is a perspective view of a cylindrical battery cell according to embodiments;
FIG. 3 is a plan view of a cell holder according to embodiments;
FIG. 4 is a cross-sectional view of a cell holder according to embodiments;
FIG. 5 is a conceptual cross-sectional view showing a cylindrical battery cell inserted into a cell holder, according to embodiments;
FIG. 6 is a conceptually enlarged cross-sectional view for explaining a position regulating protrusion according to embodiments;
FIG. 7 is an enlarged plan view of a cell holder according to an embodiment centered on a position regulating protrusion;
FIG. 8 is a perspective view of a position regulating protrusion according to embodiments;
FIG. 9 shows the position regulating protrusion shown in FIG. 7 according to other embodiments; and
FIG. 10 is a perspective view of the position regulating protrusion shown in FIG. 9.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," if preceding a list of elements, modify the entire list of elements and do not modify the individual elements of the list.

Also, when used herein, "comprise, include," and/or "comprising, including" specify the presence of stated features, numbers, steps, operations, members, elements, and/or groups thereof, but do not exclude the presence or addition of one or more other features, numbers, operations, members, elements, and/or groups thereof.

Although first, second, etc. are used to describe various components, these components are of course not limited by these terms. These terms are only used to distinguish one component from another component, and unless otherwise differently stated, the first component may also be a second component.

Throughout the specification, unless otherwise stated, each component may be singular or plural.

The arrangement of any component on "above (or below)" of a component or on "top (or bottom)" of a component may denote that not only any component is disposed in contact with an upper surface (or lower surface) of the component, but also other components may be disposed between the component and any component disposed on (or under) the component.

Additionally, if a component is described as being "connected," "coupled," or "joined" to another component, the components may be directly connected to each other, but it should be understood that the components may be connected by intervening another component between each of the components or each component may be "connected," "coupled," or "joined" through another component. Additionally, if it is said that a component is electrically coupled to another component, this includes not only a case if it is directly connected, but also a case if it is connected with another element therebetween.

The expression "A and/or B" throughout the specification means A, B, or A and B, unless otherwise differently stated. The expression "C to D" means not less than C and not more than D, unless otherwise specified.

Hereinafter, a battery pack according to embodiments will be described with reference to the accompanying drawings.

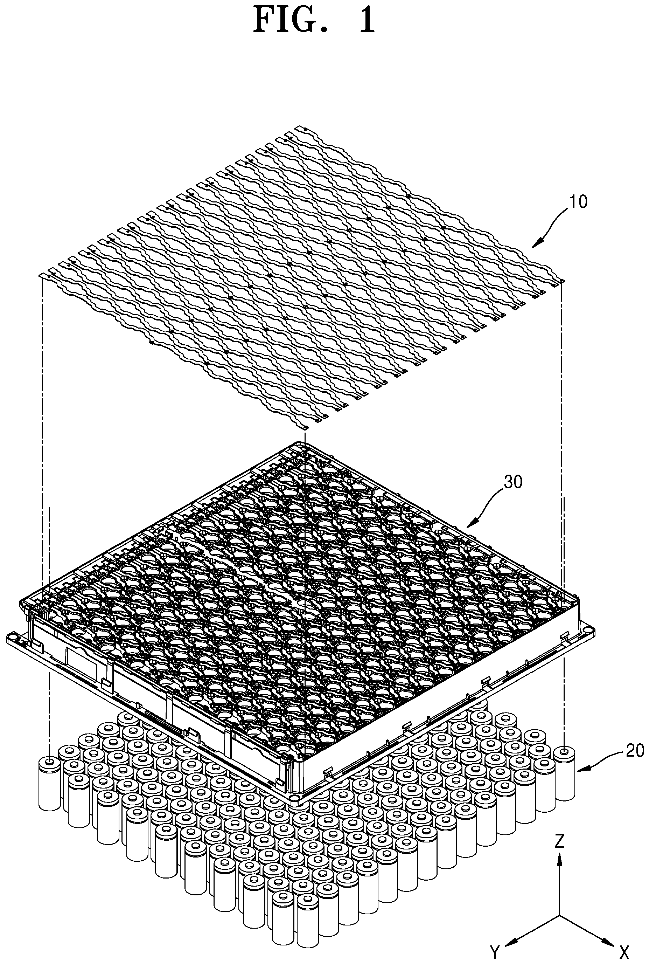

FIG. 1 is an exploded perspective view of a battery pack 1 according to embodiments.

Referring to FIG. 1, the battery pack 1 according to the embodiment includes a plurality of cylindrical battery cells 20. Hereinafter, the plurality of cylindrical battery cells 20 may be referred to as a cylindrical battery cell 20. Even if simply referred to as a cylindrical battery cell 20 in the specification, the cylindrical battery cell 20 may denote a single cylindrical battery cell 20 or a plurality of cylindrical battery cells 20.

The battery pack 1 according to the embodiment further includes a cell holder 30. The cell holder 30 accommodate the cylindrical battery cells 20. The cell holder 30 provides a space in which each of the cylindrical battery cells 20 is accommodated. The cell holder 30 supports the cylindrical battery cell 20. The cell holder 30 fixes the cylindrical battery cells 20. The cylindrical battery cells 20 are coupled to the cell holder 30. The cylindrical battery cells 20 are accommodated in the cell holder 30. For example, as illustrated in FIG. 1, the plurality of cylindrical battery cells 20 may be coupled to the cell holder 30 from bottom to top. In another example, the cylindrical battery cells 20 may be coupled to the cell holder 30 from top to bottom.

The battery pack 1 according to embodiments may include a bus bar 10. The bus bar may electrically connect the plurality of cylindrical battery cells 20 to each other.

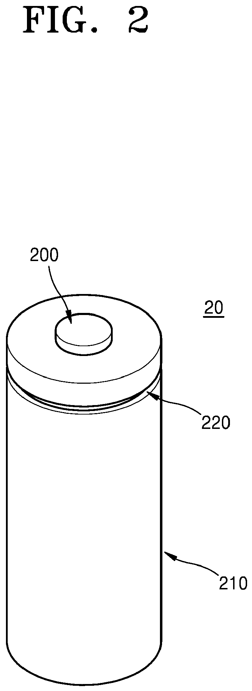

FIG. 2 is a perspective view of the cylindrical battery cell 20 according to embodiments.

Referring to FIG. 2, the cylindrical battery cell 20 has a substantially cylindrical shape. The cylindrical battery cell 20 extends (i.e. lengthwise) in a longitudinal direction. An outer circumferential surface 210 of the cylindrical battery cell 20 refers to a side of the battery cell having a cylindrical shape.

The cylindrical battery cell 20 according to the embodiment includes an electrode 200 formed at an end. The cylindrical battery cell 20 may have an electrode 200 formed at an end in the longitudinal direction in which the outer circumferential surface 210 extends. The end may be the upper and/or lower surface of the battery cell having a substantially cylindrical shape. The cylindrical battery cell 20 may have electrodes 200 formed at opposite ends (e.g., both ends) in the longitudinal direction in which the outer circumferential surface 210 extends. For example, the electrode 200 may be formed at only one end of the cylindrical battery cell 20. The electrode 200 of the cylindrical battery cell 20 may include a first electrode and a second electrode. The first electrode and the second electrode may have different polarities from each other.

The cylindrical battery cell 20 includes a beading unit 220 formed on the outer circumferential surface 210, e.g., the beading unit 220 may be a continuous trench depressed into and extending along the entire circumference of the outer circumferential surface 210 of the cylindrical battery cell 20. For example, the beading unit 220 of the cylindrical battery cell 20 may be referred to as a part of the outer circumferential surface 210. In another example, the beading unit 220 may be referred to separately from the outer circumferential surface 210, e.g., the beading unit 220 of the cylindrical battery cell 20 may be referred to as a separate configuration from the outer circumferential surface 210.

The beading unit 220 of the cylindrical battery cell 20 according to embodiments may be connected to the outer circumferential surface 210. The beading unit 220 of the cylindrical battery cell 20 may be formed on at least a portion of the outer circumferential surface 210. The beading unit 220 may be formed on the outer circumferential surface 210 between both ends of the cylindrical battery cell 20 in the longitudinal direction. The beading unit 220 may be formed in a circumferential direction of the outer circumferential surface 210 between both ends of the cylindrical battery cell 20 in the longitudinal direction. The beading unit 220 may be formed between both ends in the longitudinal direction of the cylindrical battery cell 20 at a position adjacent to one end.

The cylindrical battery cell 20 includes the beading unit 220 inserted to form a bottleneck in an inner direction of the outer circumferential surface 210. The inner direction of the outer circumferential surface 210 is directed toward an axis of the cylindrical battery cell 20. The inner direction of the outer circumferential surface 210 is a direction in which the circumference of the outer circumferential surface 210 of the cylindrical battery cell 20 decreases.

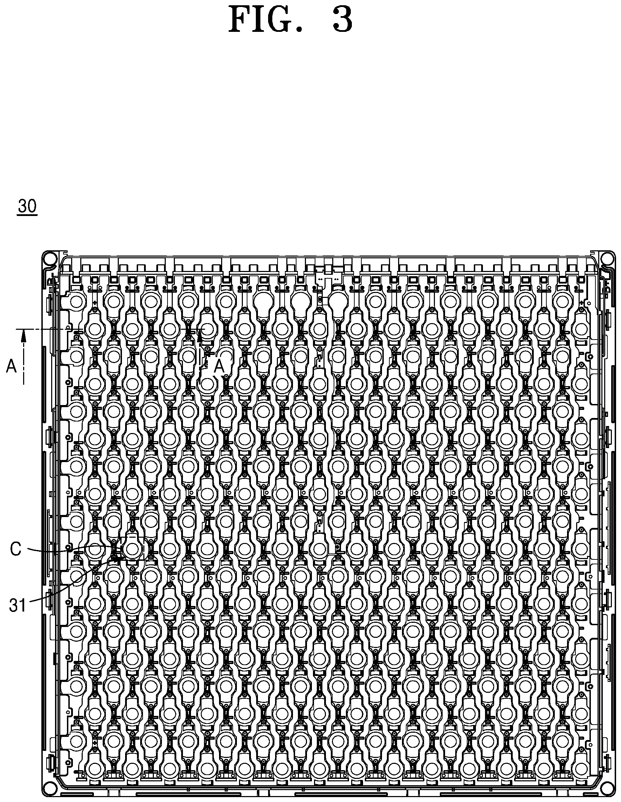

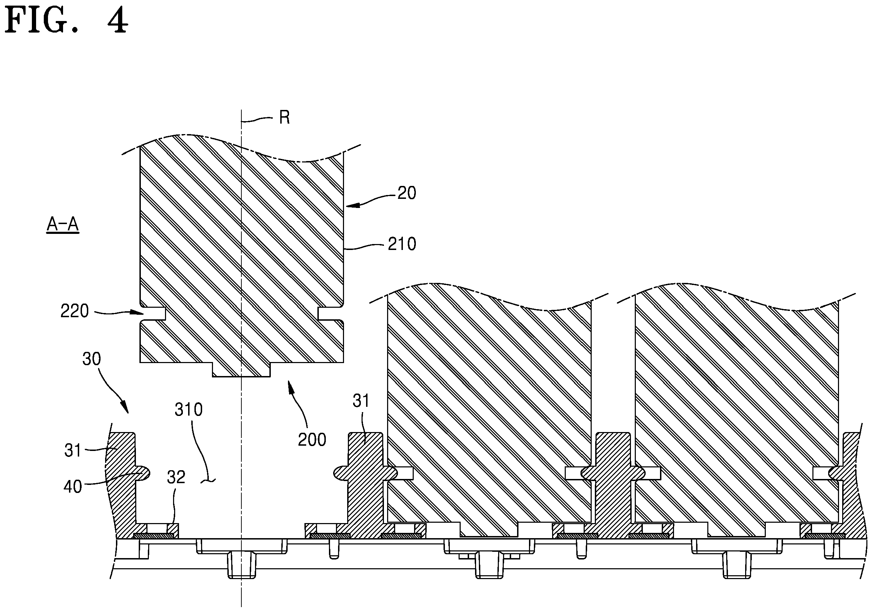

FIG. 3 is a top view of the cell holder 30 according to embodiments. FIG. 4 is a cross-sectional view of the cell holder 30 along line A-A of FIG. 3, illustrating bottom portions of two cylindrical battery cells 20 in the cell holder 30 and one cylindrical battery cell 20 above the cell holder 30.

Referring to FIGS. 3 and 4, the cell holder 30 according to embodiments may include a plurality of fixing support units 31 (e.g., a plurality of fixing supporters). Hereinafter, the plurality of fixing support units 31 may simply be referred to as fixing support unit 31. Even if it is simply referred to as the fixing support unit 31 in the specification, the fixing support unit 31 may refer to a single fixing support unit 31 or a plurality of fixing support units 31. The fixing support unit 31 is configured to fix the cylindrical battery cell 20. The fixing support unit 31 fixes the cylindrical battery cell 20 to the cell holder 30. The fixing support unit 31 fixes the cylindrical battery cell 20. The cylindrical battery cell 20 is fixed by the fixing support unit 31. The fixing support unit 31 supports the cylindrical battery cells 20. The cylindrical battery cells 20 are supported by the fixing support unit 31.

Each of the fixing support units 31 according to embodiments may extend in a direction in which the cylindrical battery cell 20 extends, e.g., the fixing support units 31 may extend (e.g., lengthwise) in parallel to the longitudinal direction of the cylindrical battery cell 20. The fixing support unit 31 covers, e.g., laterally, at least a portion of the cylindrical battery cell 20. The fixing support unit 31 covers, e.g., overlap in a horizontal direction, at least a portion of the outer circumferential surface 210 of the cylindrical battery cell 20. The fact that the fixing support unit 31 covers at least a part of the outer circumferential surface 210 denotes that at least a part of a surface forming the fixing support unit 31 is disposed in the circumferential direction in the outer circumferential surface 210.

The cylindrical battery cell 20 according to the embodiment may be inserted into the cell holder 30. The cell holder 30 may include an insertion unit 310 configured to allow each cylindrical battery cell 20 to be inserted therein. The insertion unit 310 (e.g., an insertion space) may be at least a portion of a space formed by the fixing support unit 31. The fixing support unit 31 may form the insertion unit 310 into which the cylindrical battery cell 20 is inserted between adjacent fixing support units 31. The fixing support unit 31 may provide an insertion unit 310 into which the cylindrical battery cell 20 may be inserted. For example, the leftmost cylindrical battery cell 20 in FIG. 4 is illustrated above the insertion unit 310 to clarify the shape of the insertion unit 310 and insertion of the cylindrical battery cell 20 into the insertion unit 310. In another example, any suitable arrangement and shape of the fixing support units 31 that fix the cylindrical battery cell 20 to the cell holder 30 may be implemented.

The fixing support unit 31 may regulate (e.g., control or define) a position where the cylindrical battery cell 20 is inserted. For example, the fixing support unit 31 may regulate the position of a central axis R of the cylindrical battery cell 20. For example, the fixing support unit 31 may regulate a relative position between the cylindrical battery cell 20 and the cell holder 30, e.g., the fixing support units 31 may be positioned to ensure that the central axis R of the cylindrical battery cell 20 coincides with the central axis of the insertion unit 310.

Even if the relative positions between the cylindrical battery cell 20 and the cell holder 30 are the same (e.g., central axes overlap), the cylindrical battery cell 20 may be unstable, e.g., may rotate, within the cell holder 30. For example, the cylindrical battery cell 20 inserted into the insertion unit 310 may rotate about the central axis R. If the cylindrical battery cell 20 rotates within the insertion unit 310, the electrical connection between the cylindrical battery cell 20 and the bus bar may be poor. If the cylindrical battery cell 20 rotates within the insertion unit 310, the process reliability of the battery pack may be reduced.

Hereinafter, a position regulating protrusion 40 configured to prevent rotation of the cylindrical battery cell 20 will be described. For example, as illustrated in FIG. 4, the position regulating protrusion 40 may protrude laterally from the fixing support unit 31 into the insertion unit 310.

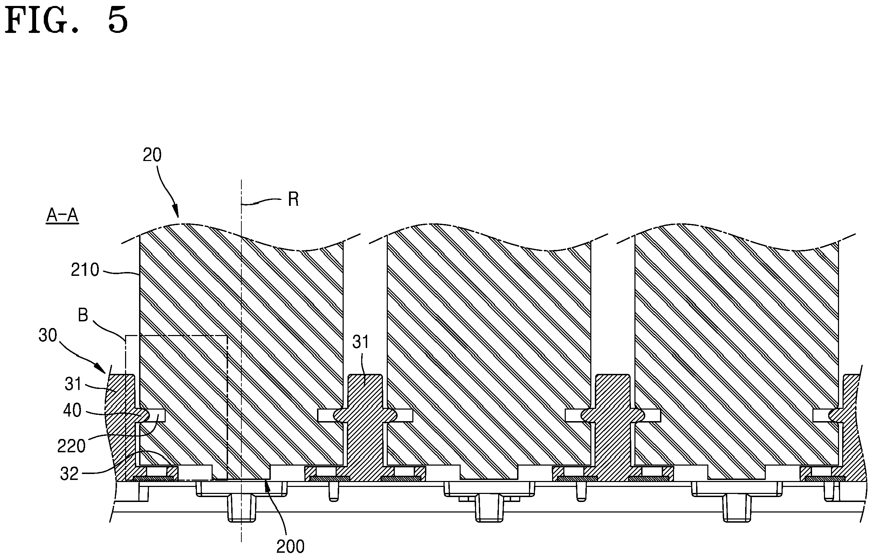

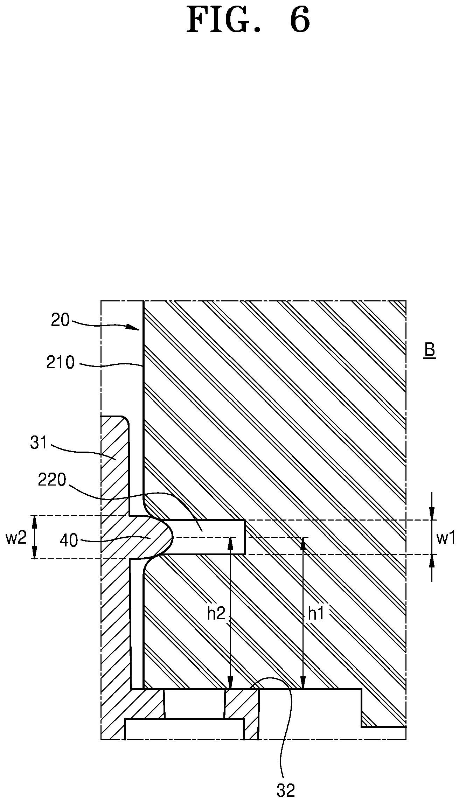

FIG. 5 is a conceptual cross-sectional view of the cell holder 30 into which the cylindrical battery cell 20is inserted. FIG. 6 is a conceptually enlarged cross-sectional view of portion B of the cross-sectional view of FIG. 5.

Referring to FIGS. 4 to 6, the fixing support unit 31 according to embodiments may include the position regulating protrusion 40. Each of the plurality of fixing support units 31 may include the position regulating protrusion 40. At least some of the plurality of fixing support units 31 may include the position regulating protrusions 40. The position regulating protrusion 40 may function to regulate the movement of the cylindrical battery cell 20. The movement of the cylindrical battery cell 20 described above may include not only parallel or perpendicular movement but also rotational movement. The position regulating protrusion 40 may be configured to prevent rotation of the cylindrical battery cell 20. The position regulating protrusion 40 may prevent the cylindrical battery cell 20 from rotating within the insertion unit 310 of the cell holder 30. The position regulating protrusion 40 may prevent the cylindrical battery cell 20 from rotating within (e.g., relative to) the fixing support unit 31. For example, the position regulating protrusion 40 may also regulate the movement of the cylindrical battery cell 20 in a height direction. For example, the position regulating protrusion 40 may also regulate the movement of the cylindrical battery cell 20 in a direction perpendicular to the height direction.

The position regulating protrusion 40 according to embodiments is formed on the fixing support unit 31. The position regulating protrusion 40 protrudes from a surface of the fixing support unit 31, e.g., the position regulating protrusion 40 protrudes laterally from a lateral surface of the fixing support unit 31. The position regulating protrusion 40 may protrude toward the central axis R of the cylindrical battery cell 20 from the fixing support unit 31, e.g., the position regulating protrusion 40 may protrude toward the center of the insertion space 310. The position regulating protrusion 40 may protrude from the fixing support unit 31 toward the outer circumferential surface 210 of the cylindrical battery cell 20. The position regulating protrusion 40 may protrude toward the beading unit 220 of the cylindrical battery cell 20. The position regulating protrusion 40 may protrude in a direction intersecting the longitudinal direction in which the outer circumferential surface 210 of the battery cell extends.

The beading unit 220 of the cylindrical battery cell 20 may be formed at a predetermined distance from an upper surface of the cylindrical battery cell 20. The beading unit 220 may be formed at a first height h1 spaced a predetermined distance from a seating unit 32 where the cylindrical battery cell 20 is seated within the cell holder 30. The position regulating protrusion 40 may be formed at a second height h2 spaced a predetermined distance from the seating unit 32 where the cylindrical battery cell 20 is seated within the cell holder 30. The first height h1 and the second height h2 may be the same. For example, the position regulating protrusion 40 may be formed at a position corresponding to the position where the beading unit 220 is formed. For example, the position regulating protrusion 40 may be formed at the same level as the beading unit 220 based on the longitudinal direction in which the outer circumferential surface 210 of the cylindrical battery cell 20 extends, e.g., centers of the position regulating protrusion 40 and of the beading unit 220 along a longitudinal direction of the cylindrical battery cell 20 may be at a same distance from a surface of the seating unit 32 that faces the cylindrical battery cell 20 (FIG. 6). If the position where the position regulating protrusion 40 is formed is at the same level as the beading unit 220, the position regulating protrusion 40 may protrude adjacent to the beading unit 220.

The position regulating protrusion 40 according to embodiments may contact the outer circumferential surface 210 of the cylindrical battery cell 20. The position regulating protrusion 40 may be inserted into the beading unit 220 of the cylindrical battery cell 20. The insertion of the position regulating protrusion 40 into the beading unit 220 may denote that the position regulating protrusion 40 protrudes in an inner direction of the beading unit 220 inserted to form a bottleneck on the outer circumferential surface 210 of the cylindrical battery.

The position regulating protrusion 40 may contact the beading unit 220 of the cylindrical battery cell 20. The position regulating protrusion 40 may contact an inner surface of the beading unit 220 of the cylindrical battery cell 20. The end of the position regulating protrusion 40 (e.g., a terminal end of the position regulating protrusion 40 facing the insertion unit 310 and/or the cylindrical battery cell 20) may be disposed in an inner area of the outer circumferential surface 210 of the cylindrical battery cell 20 (e.g., within an interior of the beading unit 220).

At least a portion of the position regulating protrusion 40 may be inserted into the inner area of the outer circumferential surface 210 of the cylindrical battery cell 20 (e.g., into the interior of the beading unit 220). For example, referring to FIG. 6, based on the cross section of the position regulating protrusion 40, the position regulating protrusion 40 may contact at least two different points of the beading unit 220, e.g., the position regulating protrusion 40 may contact at least two different surfaces of the interior of the beading unit 220.

The beading unit 220 of the cylindrical battery cell 20 may be formed to have a predetermined width. The predetermined width of the beading unit 220 may be a width measured in the longitudinal direction along which the outer circumferential surface 210 of the cylindrical battery cell 20 extends. The beading unit 220 may be inserted into the outer circumferential surface 210 of the cylindrical battery cell 20 with a predetermined width. The beading unit 220 may have a first width w1. The beading unit 220 of the cylindrical battery cell 20 may have a first width w1 in the longitudinal direction in which the outer circumferential surface 210 extends.

The position regulating protrusion 40 may be formed to have a predetermined width. The predetermined width of the position regulating protrusion 40 may be a width measured in the longitudinal direction along which the outer circumferential surface 210 of the cylindrical battery cell 20 extends. The position regulating protrusion 40 may be formed to have a second width w2. The second width w2 may be greater than the first width w1. For example, the width of the position regulating protrusion 40 may be formed to be greater than the width of the beading unit 220.

Referring to FIGS. 4 to 6, the position regulating protrusion 40 according to embodiments may be inserted into the beading unit 220 in an interference fit method, e.g., the position regulating protrusion 40 may be insertable into a portion of the interior of the beading unit 220 via the interference fit method. The interference fit method is an insertion method where an inserted object is greater (e.g., wider) than an intended space, thereby requiring application of force for the insertion of the object into the intended space. For example, if the position regulating protrusion 40 is inserted into the beading unit 220 in an interference fit method, the position regulating protrusion 40 may apply force to the beading unit 220. The position regulating protrusion 40 may apply a fixing force to the beading unit 220. The position regulating protrusion 40 may apply a fixing force to the cylindrical battery cell 20. The position regulating protrusion 40 may prevent the cylindrical battery cell 20 from moving within the cell holder 30. The position regulating protrusion 40 may prevent the cylindrical battery cell 20 from rotating around the central axis R within the cell holder 30. For example, the position regulating protrusion 40 may prevent the cylindrical battery cell 20 from rotating within the cell holder 30 by applying a fixing force to the beading unit 220 included in the cylindrical battery cell 20. The application of a fixing force to the position regulating protrusion 40 may be regulating the rotation of the cylindrical battery cell 20.

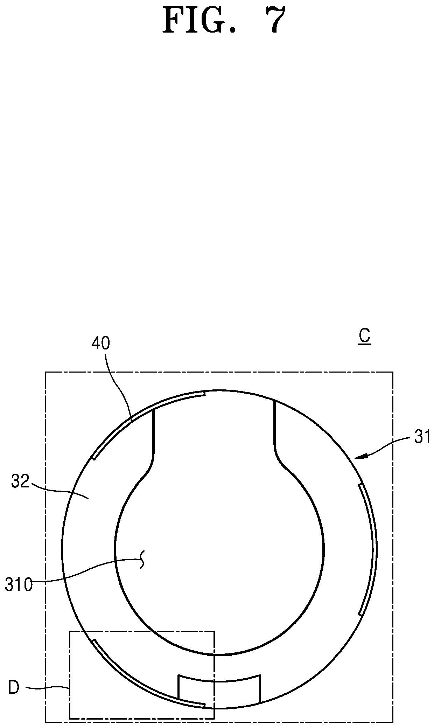

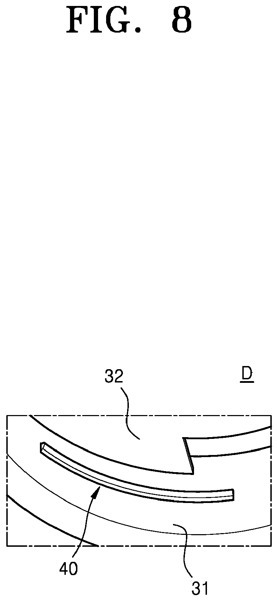

FIG. 7 is an enlarged plan view of portion C in FIG. 3, illustrating an enlarged plan view of the fixing support unit 31 in the cell holder 30 with the position regulating protrusion 40. FIG. 8 is a perspective view of portion D of FIG. 7, illustrating the position regulating protrusion 40 viewed from a different angle.

Referring to FIGS. 6 to 8, the position regulating protrusion 40 according to embodiments may be formed in a circumferential direction of the cylindrical battery cell 20 on the fixing support unit 31. The position regulating protrusion 40 may be formed on the fixing support unit 31 in a direction that follows at least a portion of the beading unit 220 of the cylindrical battery cell 20.

The number of position regulating protrusion 40 according to embodiments may be in plural numbers. The position regulating protrusions 40 may be formed in plural numbers at predetermined intervals in the circumferential direction of the outer circumferential surface 210 of the cylindrical battery cell 20. The plurality of position regulating protrusions 40 may apply a fixing force to the beading unit 220 of the cylindrical battery cell 20 at a position symmetrical with respect to the central axis R of the cylindrical battery cell 20. If the plurality of position regulating protrusions 40 apply a fixing force to the beading unit 220 at a position symmetrical with respect to the central axis R of the cylindrical battery cell 20, the movement of the cylindrical battery cell 20 may be well regulated. If the plurality of position regulating protrusions 40 apply a fixing force to the beading unit 220 at a position symmetrical with respect to the central axis R of the cylindrical battery cell 20, the rotation of the cylindrical battery cell 20 may be prevented or substantially minimized. For example, referring to FIG. 7, three position regulating protrusions 40 may be formed with an interval of 120 degrees based on the central axis R of the cylindrical battery cell 20. In other words, the at least one position regulating protrusion 40 may be formed in plural pieces arranged around a central axis R of the corresponding one of the cylindrical battery cells 20. The plural pieces of the position regulating protrusion 40 may be spaced apart at predetermined intervals in a circumferential direction of the outer circumferential surface of the corresponding one of the cylindrical battery cells 20. The plural pieces of the position regulating protrusion 40 may be arranged symmetrically with respect to the central axis R of the corresponding one of the cylindrical battery cells 20. Furthermore, the plural pieces of the position regulating protrusion 40 may include at least three pieces.

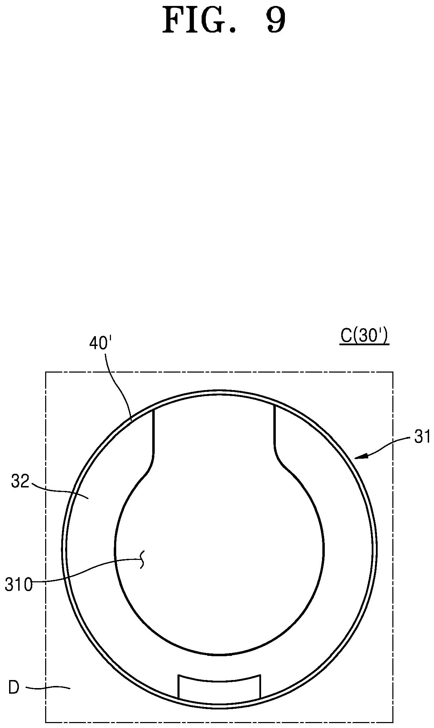

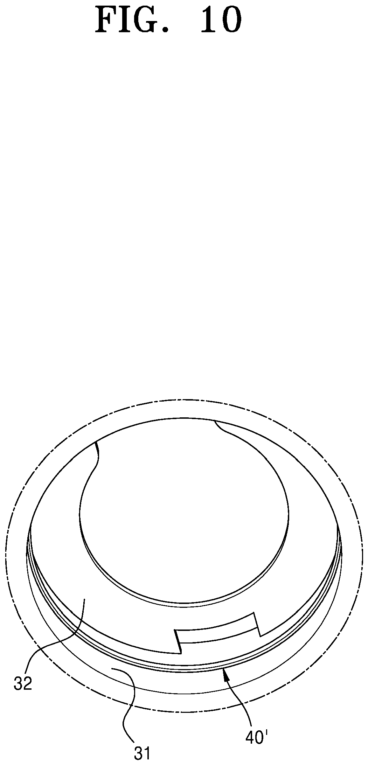

FIG. 9 is another example of a position regulating protrusion 40' in a separate cell holder 30'. FIG. 10 is an enlarged perspective view of the position regulating protrusion 40' from a different angle.

Referring to FIGS. 6 to 10, a single position regulating protrusion 40' may be formed on the fixing support unit 31. For example, as illustrated in FIG. 9, the position regulating protrusion 40' may extend continuously along an entire circumference of the cylindrical battery cell 20. If there is a single position regulation protrusion 40, it may be easy to process the protrusion 40 on the fixing support unit 31 with injection molding process. If the position regulating protrusion 40 is single, it may be easy for the position regulating protrusion 40 to prevent the cylindrical battery cell 20 from moving.

By way of summation and review, one or more embodiments provide a battery pack in which a cylindrical battery cell is stably fixed in a cell holder with at least one position regulating protrusion formed on a plurality of fixing support units, such that the position of the cylindrical battery cell in the cell holder that accommodates the cylindrical battery cell may be regulated. Such a battery pack including cylindrical battery cells stably fixed within a cell holder may have superior processability and high energy integration.

## Claims

1. A battery pack (1), comprising:
cylindrical battery cells (20), each of the cylindrical battery cells (20) including an electrode (200) and an outer circumferential surface (210) with a beading unit (220) depressed into the outer circumferential surface (210) to define a bottleneck in an inner direction of the outer circumferential surface (210); and
a cell holder (30) including fixing support units (31) configured to support the cylindrical battery cells (20), each of the fixing support units (31) covering at least a portion of the outer circumferential surface (210) of a corresponding one of the cylindrical battery cells (20), and each of the fixing support units (31) including at least one position regulating protrusion (40) protruding toward the beading unit (220) of the corresponding one of the cylindrical battery cells (20).

2. The battery pack (1) as claimed in claim 1, wherein the at least one position regulating protrusion (40) is at a same level as the beading unit (220) based on a longitudinal direction of each of the cylindrical battery cells (20).

3. The battery pack (1) as claimed in claim 1 or 2, wherein the at least one position regulating protrusion (40) protrudes from each of the fixing support units (31) in a direction crossing a longitudinal direction of each of the cylindrical battery cells (20).

4. The battery pack (1) as claimed in claim 3, wherein the at least one position regulating protrusion (40) protrudes from each of the fixing support units (31) toward a central axis (R) of the corresponding one of the cylindrical battery cells (20).

5. The battery pack (1) as claimed in claim 4, wherein an end of the at least one position regulating protrusion (40) is in an inner area of the outer circumferential surface (210) of the corresponding one of the cylindrical battery cells (20).

6. The battery pack (1) as claimed in claim 5, wherein at least a portion of the at least one position regulating protrusion (40) is inserted into the inner area of the outer circumferential surface (210) of the corresponding one of the cylindrical battery cells (20).

7. The battery pack (1) as claimed in claim 6, wherein at least a portion of the at least one position regulating protrusion (40) contacts at least a portion of the beading unit (220).

8. The battery pack (1) as claimed in claim 7, wherein the at least one position regulating protrusion (40) is insertable into the beading unit (220).

9. The battery pack (1) as claimed in claim 8, wherein:
the beading unit (220) has a first width (w1) in the longitudinal direction of each of the cylindrical battery cells (20), and
the at least one position regulating protrusion (40) has a second width (w2) in the longitudinal direction of each of the cylindrical battery cells (20), the second width (w2) being greater than the first width (w1).

10. The battery pack (1) as claimed in one or more of the preceding claims,
wherein the at least one position regulating protrusion (40) is formed in plural pieces arranged around a central axis of the corresponding one of the cylindrical battery cells (20).

11. The battery pack (1) as claimed in claim 10, wherein the plural pieces of the position regulating protrusion (40) are spaced apart at predetermined intervals in a circumferential direction of the outer circumferential surface (210) of the corresponding one of the cylindrical battery cells (20).

12. The battery pack (1) as claimed in claim 10 or 11, wherein the plural pieces of the position regulating protrusion (40) are arranged symmetrically with respect to the central axis (R) of the corresponding one of the cylindrical battery cells (20).

13. The battery pack (1) as claimed in one of claims 10 to 12, wherein the plural pieces of the position regulating protrusion (40) include at least three pieces.
